# EUROPÄISCHE PATENTSCHRIFT

(11) **EP 0 804 652 B1**
(45) Veröffentlichungstag und Bekanntmachung des Hinweises auf die Patenterteilung: **05.07.2000**
(21) Anmeldenummer: 95922687.9
(22) Anmeldetag: 22.06.1995
(51) Int. Cl.: E02D 3/12, C09K 17/12

(54) **VERFAHREN ZUM WASSERDICHTMACHEN VON IN DEN BODEN EINGEBETTETEN INGENIEURSOBJEKTEN DURCH AUFFÜLLEN**
FILLING UP PROCESS FOR WATER-PROOFING ENGINEERING OBJECTS BURIED IN THE GROUND
PROCEDE DE REMPLISSAGE UTILE POUR RENDRE ETANCHES A L'EAU DES OBJETS D'INGENIERIE ENTERRES DANS LE SOL

(30) Priorität: 23.06.1994 DE 4422062; 18.07.1994 DE 4425314
(43) Veröffentlichungstag der Anmeldung: 05.11.1997
(73) Patentinhaber: Radmer Umwelttechnik GmbH, 81377 München (DE)
(72) Erfinder: ENGEL, Tibor, H-1034 Budapest (HU); NAGY, Gábor, H-1112 Budapest (HU); SZEPVÖLGYI, János, H-2800 Tatabánya (HU); BADONFAI, Lászlú, H-1151 Budapest (HU); BAROTHY, Miklús, H-1038 Budapest (HU)
(74) Vertreter: Olgemöller, Luitgard, Dr.
(86) Internationale Anmeldenummer: HU9500028
(87) Internationale Veröffentlichungsnummer: WO9600818

(56) Entgegenhaltungen:
- EP-A- 0 345 364
- WO-A-86/06400
- FR-A- 2 533 579

## Beschreibung

Die Erfindung betrifft ein Verfahren zum Wasserdichtmachen von in den Boden eingebetteten Ingenieursobjekten, in erster Linie Kanälen, Rohrleitungen und sonstigen Bau- und Tiefbaukonstruktionen mittels Auffüllen.

In der Beschreibung und in den Ansprüchen werden unter "Ingenieursobjekten" alle Bauwerke, Konstruktionen, Objekte, ja sogar natürliche Gebilde (zum Beispiel natürliche Höhlen und Gänge) verstanden, deren Abdichtung gegen Wasser durch Auffüllen vorstellbar ist. Charakteristische Vertreter der mit dem erfindungsgemäßen Verfahren sanierbaren Ingenieursobjekte sind Kanäle, Rohrleitungen, Schächte, Speicher, Becken, Tunnel und Hohlräume. Unter "Boden" werden hier sämtliche das Ingenieursobjekt umgebende feste Medien verstanden, d.h. Boden, Gestein, Kies, Sand u. dgl. Unter "Auffüllen" wird ein mit Chemikalien arbeitendes Verfahren zum Wasserdichtmachen verstanden, in dessen Verlauf eine erste Chemikalienlösung in oder auf das zu behandelnde Objekt gebracht wird, und nach einer bestimmten Zeit, nach dem notwendigenfalls erfolgenden Entfernen des Chemikalienüberschusses eine zweite Chemikalienlösung in oder auf das zu behandelnde Objekt gebracht wird.

Es ist bekannt, daß die Wasserdichtigkeit der in den Boden eingebetteten Ingenieursobjekte (zum Beispiel unterirdische Kanäle, Rohrleitungen und Speicher) häufig nicht den Anforderungen entspricht, was zum Teil der ungeeigneten Qualität der verwendeten Baustoffe, zum Teil den Mängeln an den Stoßstellen der Rohre und zum Teil der völligen Überalterung der Ingenieursobjekte und den durch den Anstieg der mechanischen und chemischen Belastung eingetretenen Schädigungen zuzuschreiben ist.

Es ist ferner bekannt, daß die Beseitigung der Mängel an in den Boden eingebetteten Ingenieursobjekten mittels Umbau oder durch herkömmliches Ausbessern außerordentlich kosten- und arbeitsaufwendig ist.

Zur Verfestigung des Bodens - vor dem Bau eines Objektes oder bei dessen nachträglicher Reparatur - werden schon seit langem Chemikalien verwendet. Allen diesen mit Chemikalien arbeitenden Verfahren ist gemeinsam, daß in den zu behandelnden Boden beziehungsweise in die Umgebung des Objektes Flüssigkeiten eingebracht werden, die zusammen mit einer zweiten Komponente ein gegen Wasser isolierendes und den Boden verfestigendes Gel bilden.

Bei dem am längsten bekannten chemischen Verfahren zum Verfestigen des Bodens und zum Isolieren gegen Wasser wurde als gelbildende Flüssigkeit wässrige Wasserglaslösung verwendet. Die Gelbildung wurde mit Salzen mehrwertiger Metalle (zum Beispiel Calciumchlorid und/oder Magnesiumchlorid) initiiert (Literatur: Bowen, R.:Grouting in Engineering Practice. Applied Science Publishers LTD, London 1975).

Die beiden Lösungen wurden in beliebiger Reihenfolge nacheinander in den zu behandelnden Boden eingebracht. Aus dem Wasserglas entsteht durch die Einwirkung der Salze ein Gel, das den Boden wasserdicht macht und gleichzeitig verfestigt.

Bei der praktischen Anwendung des Verfahrens stellte sich jedoch heraus, daß mit den mehrwertige Kationen enthaltenden Salzlösungen ein schnelles und vollständiges Gelieren an den zu isolierenden bzw. abzudichtenden Stellen nicht gewährleistet werden kann. Wenn bei der Kanalsanierung durch Auffüllen die wässrige Salzlösung als erstes in den Kanal gegeben wird, so läuft sie an den Schadstellen des Kanals ungehindert in das den Kanal umgebende Erdreich und kann von dort weite Strecken sickern. Infolgedessen ist an den Schadstellen die vorhandene lokale Salzkonzentration nicht hoch genug, um ein schnelles und vollständiges Gelieren der als zweite Flüssigkeit eingeleiteten Wasserglaslösung an den Schadstellen zu sichern. Die Wasserglaslösung kann deshalb noch verhältnismäßig lange ungeliert durch die Schadstellen austreten und versickern. Das schließlich in größerer Entfernung von der Schadstelle entstehende Gel ist von lockerer Struktur, stark mit Boden durchsetzt und zum völligen Abdichten gegen Wasser im wesentlichen ungeeignet. Wenn man die Reihenfolge der beiden Lösungen umkehrt, so bildet die als zweite Lösung eingeleitete Metallsalzlösung auf der Oberfläche der mit ihr unmittelbar in Berührung kommenden Wasserglaslösung eine Gelhaut, durch die sie nicht weiter vordringen kann. Dadurch bleibt ein großer Teil der als erste Flüssigkeit eingeführten Wasserglaslösung ungeliert und trägt nichts zur Wasserdichtigkeit und Isolierung bei.

Zur Beseitigung dieser Mängel wurden später Technologien ausgearbeitet, bei denen zum Gelieren des Wasserglases Chemikalien eingesetzt wurden, die sich leichter mit Wasserglas mischen lassen, mit Wasserglas in eine regulierbare Reaktion treten beziehungsweise selbst ein Gel bilden.

Gemäß der ungarischen Patentschrift Nr. 153 975 wird die Wasserglaslösung mit gasförmigen Fluoriden (Fluorwasserstoff, Siliciumtetrafluorid, Wasserstoffsilicofluorid) geliert. In der ungarischen Patentschrift Nr. 186 586 ist eine Variante dieses Verfahrens beschrieben, gemäß welcher der Wasserglaslösung ein die Elastizität des entstehenden Gels erhöhendes organisches Polymer zugesetzt wird. Dieses Verfahren wird jedoch kaum noch angewendet, weil der Einsatz der tatsächlich ein schnelles und vollständiges Gelieren gewährleistenden gasförmigen Fluoride und Wasserstoffsilikofluorid-Lösungen wegen ihrer hohen Giftigkeit in den meisten Ländern verboten ist. Auch das Verfahren der FR 2 533 579 arbeitet unter Verwendung von Fluorkieselsäure, die in einem Hydrogel der Wasserglaslösung zugesetzt wird.

Es sind auch zahlreiche Verfahren bekannt, bei denen zum Gelieren der Wasserglaslösung organische Stoffe verwendet werden, die mit dem Laugengehalt der Wasserglaslösungen reagieren. In der ungarischen Patentschrift Nr. 189 250 ist eine Technologie beschrieben, bei der die mit Wasser oder einem Ester als Lösungsmittel bereitete Lösung eines Esterbindungen enthaltenden organischen Polymers mit der Wasserglaslösung vermischt und dann das Polymer vernetzt wird. Gemäß der britischen Patentschrift Nr. 2 186 879 wird aus der Wasserglaslösung durch Zusatz von organischen Polycarbonsäuren das Gel gebildet, und gleichzeitig werden zur Erhöhung der Elastizität des Gels organische Polymere eingebaut. Gemäß der ungarischen Patentschrift Nr. 200 498 wird die wässrige Wasserglaslösung mit einem Kieselsäure-Sol in Berührung gebracht, dessen Dispersionsmedium von einer mit Lauge unter gleichzeitiger Abscheidung von Kieselsäure und Wasserglas reagierenden Flüssigkeit gebildet wird. Im Sinne der ungarischen Patentschrift Nr. 201 575 wird der Wasserglaslösung Eiweißhydrolysat zugesetzt, das die Geleigenschaften verändert und das Gelieren fördert; das Gemisch wird dann mit einem sauer reagierenden wässrigen Kieselsäuregel geliert.

Die letztgenannten Verfahren haben gemeinsam, daß zum Gelieren und/oder zur Änderung der Eigenschaften des Gels beträchtliche Mengen an organischen Stoffen verwendet werden. Diese organischen Stoffe bilden das wasserisolierende Gel aus der Wasserglaslösung im allgemeinen nicht in einer Augenblicksreaktion, sondern in einer sich länger hinziehenden Zeitreaktion, sie können daher vom Ort der Behandlung abwandern und unkontrolliert auf andere Gebiete gelangen. Wenn der organische Stoff bei der Gelbildungsreaktion nicht aufgebraucht beziehungsweise nicht vollständig in die Gelstruktur eingeschlossen wird, kann dieser Überschuß später nicht mehr beseitigt werden, sondern verbleibt in der Umwelt. Aus Gründen des Umweltschutzes sind daher Art und Menge der in den Boden einbringbaren organischen Stoffe streng begrenzt, und diese Vorschriften schränken die Anwendbarkeit der mit Chemikalien arbeitenden Dichtungsverfahren stark ein.

Ein großer Teil der zum Gelieren der wässrigen Wasserglaslösung geeigneten Salze mehrwertiger Kationen (zum Beispiel ein bedeutender Teil der Calcium-, Magnesium-, Eisen- oder Aluminiumsalze) sind umweltfreundliche, ungefährliche, natürliche Stoffe. Diese Metallsalze sind auch zum Gelieren wässriger Kieselsäuresole geeignet. Unter dem Aspekt des Umweltschutzes wäre es außerordentlich vorteilhaft, bei dem durch Auffüllen erfolgenden Wasserdichtmachen von in den Boden eingebetteten Ingenieursobjekten (in erster Linie Kanälen) als Geliermittel umweltfreundliche, wasserlösliche Salze mehrwertiger Metalle zu verwenden; es muß jedoch unbedingt gewährleistet sein, daß die Metallsalze an dem gewünschten Ort der Isolierungsarbeiten und in der zum schnellen und vollständigen Gelieren der Wasserglaslösung oder des Kieselsäuregels ausreichenden lokalen Konzentration vorliegen.

Gegenstand der Erfindung ist die Lösung der genannten Aufgabe.

Es wurde erkannt, daß - wenn man zum Wasserdichtmachen von in den Boden eingebetteten Ingenieursobjekten ein Auffüllverfahren anwendet, bei dem
- als erste Lösung die wäßrige Lösung von wasserlöslichen Salzen mehrwertiger Metalle in oder auf das Ingenieursobjekt gebracht,
- gegebenenfalls der Überschuß der wässrigen Metallsalzlösung entfernt,und
- als zweite Lösung eine gegebenenfalls bekannte Zusatzstoffe enthaltende wässrige Wasserglaslösung mit einer Viskosität von 20 bis 200 mPa·s oder wässriges Kieselsäuresol eines pH-Wertes von 1-9 in oder auf das Ingenieursobjekt gebracht wird -
die zur schnellen und vollständigen Gelieren erforderliche lokale Metallsalzkonzentration an den gewünschten Stellen der Isolierungsarbeiten dadurch gewährleistet werden kann, daß man
a) die Viskosität der wässrigen Lösung der Salze mehrwertiger Metalle mit wasserlöslichen, nichtionischen, linearen Polymeren auf 20-200 mPa.s, einstellt, oder
b) als Lösung der wasserlöslichen Salze mehrwertiger Metalle eine bei 35-45 °C gesättigte Lösung der entsprechenden Salze verwendet,
c) der Lösung der wasserlöslichen Salze mehrwertiger Metalle Alkalicarbonat und/oder -hydrogencarbonat und gegebenenfalls/oder Kohlendioxyd in einer Menge zusetzt, daß sich noch kein Niederschlag bildet, oder
d) der Lösung der wasserlöslichen Salze mehrwertiger Metalle entweder eine vorher getrennt bereitete feine wäßrige Suspension zumischt und/oder in der Lösung selbst eine feine Suspension erzeugt
e) die Methoden a) - d) kombiniert anwendet, wobei im Falle der Methoden a) und d) die Reihenfolge der beiden Lösungen (1. Lösung, 2. Lösung) auch umgekehrt werden kann und das Auffüllen erforderlichenfalls noch einmal oder mehrmals wiederholt wird, mit der Maßgabe, daß weder die 1. Lösung noch die 2. Lösung Fluorkieselsäure enthält.

Im folgenden wird die wäßrige Lösung der wasserlöslichen Salze mehrwertiger Metalle, die zweckmäßig noch Zusätze enthält, als Komponente A, die wäßrige Wasserglaslösung bzw. das einen pH-Wert zwischen 1 und 9 aufweisende Kieselsäure-sol als Komponente B bezeichnet.

Unter dem Terminus "wasserlösliche Salze mehrwertiger Metalle" werden im folgenden ausschließlich Metallsalze verstanden, die für die Umwelt nicht schädlich sind, zum Beispiel die Calcium-, Magnesium-, Eisen- und Aluminiumsalze. Insbesondere bevorzugt sind die Eisen- und Aluminiumsalze, weil sich aus ihnen durch die Alkalität der Wasserglaslösung bzw. des Kieselsäuresols gelbildende, gut abdichtende Hydroxyde bilden.

Die in dem erfindungsgemäßen Verfahren als erstes auf das zu behandelnde Gebiet geleitete Lösung, die von dem Objekt in größere Entfernung sickern kann, hat eine Zusammensetzung, die - das im Verfahren a) eingesetzte Polymer abgerechnet - der Zusammensetzung der an zahlreichen Stelen in der Natur an die Oberfläche tretenden Heilwässern nahekommt. Der Unterschied besteht im wesentlichen nur darin, daß die Lösungen für das erfindungsgemäße Verfahren künstlich hergestellt werden.

Im Verfahren a) wird durch das Einstellen der Viskosität der Metallsalzlösung in erster Linie das Versickern der Lösung gebremst, dadurch wird die lokale Konzentration der Metallsalze an den gewünschten Stellen erhöht. Die erhöhte Viskosität hat außerdem den Vorteil, daß sich dadurch die Viskositäten der beiden Lösungen ähnlicher sind und dadurch die Spalten und Ritzen im Boden als statischer Mischer wirken und die beiden Lösungen gut miteinander vermischen.

Zur Erhöhung der Viskosität der wässrigen Metallsalzlösung können gesundheitlich unbedenkliche nichtionische lineare Polymere eingesetzt werden. Es können Homopolymere und Copolymere gleichermaßen verwendet werden, der Terminus "Polymer" schließt beide ein. Als Beispiele für verwendbare Polymere seien genannt: Polyacrylamide, Polyethylenoxyde, Polyvinylalkohole, Polyvinylpyrrolidone, wasserlösliche Celluloseether (zum Beispiel Methylcellulose, Hydroxyethylcellulose) usw.

Die Molmasse der verwendbaren Polymere liegt vorteilhaft zwischen 5x10⁴ und 2x10⁷, insbesondere oberhalb von 1x10⁵. Je größer die Molmasse des eingesetzten Polymers ist, um so geringer ist die Menge, die zum Einstellen der Viskosität der Metallsalzlösung gebraucht wird. Die wässrige Metallsalzlösung kann etwa 0,01-10 Masse% Polymer enthalten. Ein derartiger Gehalt an organischen Stoffen ist auch in Ländern mit sehr strenger Umweltschutzgesetzgebung noch erlaubt.

Im Falle des Verfahrens a) ist es zweckmäßig, den Vernetzer des der Metallsalzlösung zugesetzten linearen Polymers der als zweite Lösung eingeleiteten Wasserglaslösung zuzusetzen. Dadurch wird das Polymer mittels Vernetzung immobilisiert, wodurch verhindert wird, daß das Polymer oder ein Teil davon innerhalb längerer Zeit weitere Strecken zurücklegt oder mit dem Regen- oder Grundwasser ausgewaschen wird. Durch die Immobilisierung des Polymers kann auch den strengsten Umweltschutzvorschriften entsprochen werden.

Der Vernetzer für das Polymer wird entsprechend der Art des Polymers gewählt, wobei darauf zu achten ist, daß diese Vernetzer mit der Wasserglaslösung beziehungsweise dem wässrigen Kieselsäuresol kompatibel sein müssen. Zur Vernetzung der oben genannten Polymertypen geeignete Stoffe sind dem in der Kunststoffchemie bewanderten Fachmann bekannt. Als Beispiele für Vernetzer seien die Radikalbildner genannt, wie zum Beispiel Wasserstoffperoxyd, Kaliumpersulfat, wasserlösliche organische Peroxyde, wie sulfoniertes Benzoylperoxyd. Einzelne Polymervernetzer, wie zum Beispiel die Aldehyde, sind in der das Polymer enthaltenden wässrigen Metallsalzlösung inaktiv und treten erst in der alkalischen Wasserglaslösung bzw. dem Kieselsäuresol in Wechselwirkung mit dem beweglichen Wasserstoff enthaltenden Polymer. Diese Vernetzer können der polymerhaltigen wässrigen Metallsalzlosung zugemischt werden.

Beim erfindungsgemäßen Verfahren b) wird dem zu behandelnden Ingenieursobjekt eine 35-45 °C warme und bei dieser Temperatur gesättigte Metallsalzlösung zugeführt. In dem das Ingenieursobjekt umgebenden Boden, dessen Temperatur lediglich um einige Grad Celsius um einen konstanten Wert, charakteristisch um 10-18 °C schwankt, kühlt die Lösung plötzlich ab, und dabei fällt am gewünschten Ort der Isolierungsarbeiten das warm gelöste Salz in Form eines feinverteilten Niederschlages aus. An der gewünschten Stelle entsteht dadurch eine hohe lokale Salzkonzentration, die die im zweiten Schritt eingeführte Wasserglaslösung bzw. das Kieselsäuresol schnell und vollständig an der gewünschten Stelle geliert.

Im erfindungsgemäßen Verfahren c) wird eine wässrige Metallsalzlösung hergestellt, aus der sich, wenn sie in den Boden gelangt, die Metallkationen zum Teil als Carbonat und/ oder Hydrogencarbonat ausscheiden. Zu der wässrigen Metallsalzlösung werden Alkalicarbonate, Alkalihydrogencarbonate und notwendigenfalls Kohlendioxyd in einem Maße gegeben, daß bei Lagerung in einem geschlossenen Gefäß noch kein Niederschlag ausfällt. Vorzugsweise werden die Alkalihydrogencarbonate verwendet. Die erforderlichen hängen von den jeweils gewählten Bedingungen ab und lassen sich vom Fachmann ohne weiteres durch wenige Versuche ermitteln. So können beispielsweise 1-15%, bevorzugt 5% Carbonatverbindungen eingesetzt werden. Wenn diese wässrige Metallsalzlösung mit dem Boden in Berührung kommt, so wird - zum Teil durch den Mechanismus des Konzentrationsausgleichs, zum Teil durch die Oberflächenwirkung des körnigen Feststoffes - das gelöste Kohlendioxyd und ein Teil das in Form von Hydrogencarbonat gebundenen Kohlendioxyds freigesetzt, und aus der Lösung scheiden sich am gewünschten Ort der Isolierungsarbeiten die entsprechenden Metallcarbonate ab, die wesentlich schlechter löslich sind als die Hydrogencarbonate. Auch auf diese Weise entsteht an der gewünschten Stelle die zum Gelieren erforderliche Metallionenkonzentration.

Im erfindungsgemäßen Verfahren d) wird eine wäßrige Metallsalzlösung eingesetzt, der entweder eine vorher getrennt bereitete feine wäßrige Suspension zugemischt oder in der Lösung selbst eine feine Suspension erzeugt wird, und zwar
- durch Dispergieren feiner staubförmiger Stoffe,
- durch Ausfällen mittels einer weiteren, der Metallsalzlösung zugesetzten Lösung,
- durch Koagulieren des der Metallsalzlösung zugesetzten Kieselsäuresols oder
- durch Kombinationen dieser Möglichkeiten.

Unter feiner Suspension bzw. fein suspendierten staubförmigen Teilchen werden hier feste Teilchen verstanden, deren durchschnittlicher Durchmesser kleiner als 0,03 mm, vorzugsweise kleiner als 0,003 mm ist.

Die feine Suspension kann zum Beispiel aus Na-Bentonit, Ca-Bentonit, Kaolinit, Zeolith, Quarzmehl, Kalkstein, Dolomit, Aerosil, Tonerdehydrat und noch zahlreichen anderen natürlichen oder synthetischen Stoffen hergestellt werden.

Die erfindungsgemäßen Verfahren a) - d) können auch miteinander kombiniert werden. Zum Beispiel kann man die gemäß dem Verfahren a) mit Polymer versetzte wässrige Metallsalzlösung auf 35-45 °C erwärmen und die bei dieser Temperatur gesättigte Lösung in oder auf das zu behandelnde Objekt leiten. Dabei addieren sich die günstigen Wirkungen der beiden Verfahren, d.h. einesteils fällt das warm gelöste Salz in Form eines feinverteilten Niederschlages an der gewünschten Stelle aus, zum anderen wird eine schnelle Migration der bei Bodentemperatur (10-18 °C) an Metallsalz gesättigten Lösung durch das Polymer verhindert. Bei dieser kombinierten Anwendung kann die Menge des zum Einstellen der Viskosität der wässrigen Metallsalzlösung erforderlichen Polymers weiter verringert werden, weil es ausreicht, die Viskosität auf die untere Grenze des oben angegebenen Bereiches einzustellen.

Eine weitere Kombinationsmöglichkeit besteht darin, der mit dem Polymer versetzten Metallsalzlösung Alkalicarbonate, -hydrogencarbonate und erforderlichenfalls Kohlendioxyd zuzusetzen.

Auch eine Kombination der Verfahren b) - d) kann in der Praxis erfolgreich angewendet werden.

Fallweise kann es erforderlich sein, im Interesse einer völligen Abdichtung das Auffüllen einmal oder mehrmals zu wiederholen. Dabei können die Auffüllungen nach verschiedenen Methoden vorgenommen werden, zum Beispiel kann das erste Auffüllen nach der Methode a), das zweite nach der Methode d) erfolgen, auch können in den einzelnen Schritten Komponenten A und B unterschiedlicher Zusammensetzung und/ oder Viskosität eingesetzt werden. Zum Beispiel ist es zweckmäßig, zum ersten Auffüllen Komponenten A und B einer höheren Viskosität, zum zweiten Auffüllen "dünnere", d.h. Komponenten A und B geringerer Viskosität zu verwenden.

Die Abdichtung der Ingenieursobjekte gegen Wasser gelingt im Falle der Methoden a) und/oder d) auch dann, wenn die beiden Lösungen in umgekehrter Reihenfolge angewendet werden. Wird also zum Beispiel der schadhafte Kanalabschnitt zuerst mit der Komponente B und nach deren Zurückpumpen mit der Komponente A aufgefüllt, so bildet sich im Boden eine dauerhaft wasserisolierende Gelmasse. Die Effizienz der Sanierung steigt im allgemeinen, wenn das Auffüllen wiederholt wird; in diesem Falle ist die Reihenfolge B,A,B,A. Laboratoriumsversuche und halbtechnische Experimente haben bewiesen, daß unter ansonsten völlig identischen Bedingungen und bei gleichen Rezepturen in der Reihenfolge A,B,A,B eine etwas festere Gelmasse entsteht; hinsichtlich der Wasserdichtigkeit sind die beiden Methoden gleichwertig.

Wird wie vorstehend beschrieben zuerst die Komponente B eingeleitet, so kann diese in einer spezifischen Ausführungsform so zusammengesetzt sein, daß sie bereits als solche langsam geliert. Beispielsweise kann die Komponente B eine wässrige Wasserglaslösung sein, der ein Wasserglasvernetzer beigegeben ist. Wasserglasvernetzer sind dem Fachmann bekannt. Es lassen sich dafür Ester, Aldehyde und dgl. einsetzen. Man kann die Lösung so einstellen, daß z. B. etwa nach 2 Stunden die Gelbildung einsetzt. Selbstverständlich sind je nach Bodenbeschaffenheit und Größe der Leckagen auch andere Zeiteinstellungen möglich. Diese Ausführungsform hat den Vorteil, daß bereits mit der Einleitung der Komponente B die Abdichtung des Ingenieursabjekts beginnt und dadurch die Effizienz des Verfahrens insgesamt erhöht wird. Allerdings muß darauf geachtet werden, daß sich die Komponente B trotz ihrer Gelbildungstendenz ausreichend gut zurückpumpen läßt und auch im Tankwagen flüssig bleibt. Deshalb muß man sie zum Zurückpumpen an Ort und Stelle mit einer die Gelbildung inhibierenden Flüssigkeit grob regenerieren, beispielsweise durch Zugabe einer wässrigen alkalischen Flüssigkeit wie Natronlauge. Damit wird auch verhindert, daß die Gelbildung nach dem Zurückpumpen im Tankwagen beginnt oder sich dort fortsetzt.

In dem erfindungsgemäßen Verfahren werden bevorzugt Wasserglaslösungen eingesetzt, deren Modul (SiO₂/Na₂O-Verhältnis) größer als 3, vorzugsweise größer als 3,4 ist und deren Viskosität bei 20-200 mPa.s liegt.

Die anwendbaren wässrigen Kieselsäuresole sind bevorzugt schwach alkalisch (pH 7,5-9), und ihr Trockensubstanzgehalt liegt über 20 Masse%. Der Trockensubstanzgehalt der im Handel befindlichen wässrigen Kieselsäuresole beträgt im allgemeinen höchstens 50 Masse%.

Die wäßrigen Wasserglaslösungen und wäßrigen Kieselsäuresole können erforderlichenfalls bekannte Zusatzstoffe, zum Beispiel Betonplastifikatoren, wasserlösliche organische Polymere, Puffer, Tenside, Schaumhemmer enthalten. Die möglichen Zusätze sind in den oben zitierten Patentschriften näher spezifiziert.

In den folgenden Beispielen beziehen sich die Prozentangaben auf das Gewicht.

### Beispiel 1

Zum Vergleich der unterschiedlichen Rezepturen unter großtechnischen Bedingungen wurde eine Pilotanlage gebaut. Jede Einheit der Pilotanlage bestand aus vorgefertigten, auf einer Seite eine Muffe zum Einlegen des nächsten Rohres aufweisenden Betonrohren von 2 m Länge und 300 mm Durchmesser, die in 2 m Tiefe als 6 m langer Abschnitt verlegt waren. Beide Seiten dieses Abschnitts mündeten in vorgefertigte Standartschächte kreisförmigen Querschnitts. Beim Verlegen der Rohre wurde zum Einbetten und zum Auffüllen (bis zu 30 cm über den Rohren) der Gräben drei verschiedene Stoffe verwendet: Sand einer Teilchengröße bis zu 1 mm, Kies einer Teilchengröße von 0,2-20 mm und schließlich gesiebter Kies einer Teilchengröße von 2-20 mm. In einem Versuch (Versuch 6) wurde zum Einbetten ein etwa im Verhältnis 1:1 bereitetes Gemisch aus Sand und Kies verwendet. Die einzelnen Abschnitte der Pilotanlage wurden identisch angelegt, und in jedem wurden künstlich mehrere Schadstellen angelegt, deren Anzahl und Größe jedoch bei allen Abschnitten gleich war. Zum Beispiel wurde an einer Stoßstelle der Gummiring aus der Muffe entfernt, an einer anderen Stoßstelle wurde ein Stück aus dem Rohr herausgebrochen, die Rohre wurden von oben, von unten und von der Seite angebohrt, an den seitlichen Einbindungsstellen wurde die Rohrwand fehlerhaft aufgestemmt usw. Diese Schadstellen wurden numeriert sowie vor und nach der Reparatur photographiert. Auf diese Weise war klar erkennbar, welche Mengen Gel bzw. verfestigten Bodenmörtel die einzelnen Rezepturen bei unterschiedlichen Bodenverhältnissen zu bilden vermögen und welche Qualität dieser Bodenmörtel hat.

Zum Auffüllen eines Rohrabschnittes mit zwei Schächten (zu Beginn bis zum Rand des Schachtes) waren etwa 3 m³ Flüssigkeit erforderlich, jedoch wurden in Hinblick auf den zu erwartenden Verbrauch von den einzelnen Komponenten A und B je 3,6 m³ bereitgestellt. Die Beförderung der Flüssigkeit aus dem Behälter in den zu sanierenden Rohrabschnitt und - nach einer entsprechenden Wartezeit - aus dem Rohrabschnitt zurück in den Behälter erfolgte mittels Hochleistungstaucherpumpen innerhalb einiger Minuten; während der Wartezeit dringt die Flüssigkeit infolge ihres eigenen hydrostatischen Druckes in die Schadstellen ein.

Die Komponenten der ersten Rezeptur hatten folgende Zusammensetzung:

| | | |
|---|---|---|
| Komponente A | 2 % | Polyacrylamid (PAA), Hersteller: Interkémia GmbH, Budapest, mittlere Molmasse 9.10⁵, in Form einer 5 %igen wäßrigen Lösung erhältlich, nichtionisch, frei von Monomeren; |
| | 10 % | MgCl₂, technisches MgCl₂.6H₂O wurde in der PAA-Lösung aufgelöst; |
| | 4 % | FeSO₄, technisches FeSO₄.7H₂O wurde in der PAA-Lösung aufgelöst |
| | 0,5 % | Glutaraldehyd, technische Qualität, etwa 25 %ige Lösung; |
| | 83,5 % | Wasser. |

Im einzelnen erfolgte die Herstellung wie folgt. 1,63 m³ (etwas mehr als 8 Fässer) der 5 %igen PAA-Lösung wurden in einen Metallbehälter von 4 m³ Volumen gefüllt. Nach Zugabe von 1 m³ Leitungswasser wurde die Lösung mittels einer Pumpe umgewälzt. Währenddessen wurden aus Säcken 869 kg kristallines Magnesiumchlorid (407 kg reines MgCl₂) und 298 kg kristallines Eisensulfat (163 kg reines FeSO₄) zugegeben. Nachdem sich die Salze gelöst hatten, wurden 78 l Glutaraldehydlösung zugegeben. Dann wurde die Lösung mit Leitungswasser auf 3,6 m³ aufgefüllt. Die Viskosität der homogenisierten Lösung bei Raumtemperatur betrug 75 mPa.s.

| | | |
|---|---|---|
| Komponente B | 97,5 % | konzentriertes Na-Wasserglas, Hersteller: Kemikäl, Budapest, Modul: etwa 3,5 |
| | 2,5 % | sulfomethyliertes Melamin, das in Form einer 20 %igen Lösung als Betonplastifikator BP-1 auf dem Markt ist (Hersteller: Agrokémia) |

Die Herstellung der Komponente B erfolgt im einzelnen wie folgt. In einen zweiten Behälter von 4 m³ Volumen wurden 3 m³ Wasserglas (4,05 t) gefüllt, 580 Liter BP-1-Lösung (etwa 3 Fässer) wurden zugegeben, und die Lösung wurde mittels einer Pumpe umgewälzt. Die Viskosität der homogenen Lösung betrug bei Raumtemperatur 60 mPa.s.

Der zu sanierende, 6 m lange Rohrabschnitt und die beiden zugehörigen Schächte wurden mit der Lösung A aufgefüllt, daran schloß sich eine Wartezeit von etwa 15 Minuten an, während dieser Zeit sank der Spiegel des Lösung um 40 cm, d.h. etwa 500 l Lösung waren in den Boden eingesickert. Der Rest der Lösung wurde in den Behälter zurückgepumpt. Sobald die Komponente A aus dem Schacht entfernt war, wurde mit dem Einpumpen der Komponente B begonnen. Auch mit der Komponente B wurde der Schacht bis zum Überlaufen gefüllt. Das Absinken des Flüssigkeitsspiegels wurde minütlich gemessen. Es wurde immer langsamer, und hörte nach etwa einer Stunde ganz auf. Der Spiegel der Komponente B sank im ganzen um 29 cm, d.h. etwa 370 l Komponente B versickerten im Boden. Der Rest der Wasserglaslösung wurde in den Behälter zurückgepumpt. Der sanierte Rohrabschnitt wurde mit Leitungswasser gefüllt, das Sinken des Wasserspiegels wurde beobachtet.

Der gemessene Wert lag unter der zulässigen unteren Grenze, d. h. die Reparatur war in einem einzigen Zyklus erfolgreich ausgeführt worden. Das Auffüllen mit Wasser wurde nach einem Monat und nach zwei Monaten wiederholt. Nach dem ersten Monat war das Absinken des Wasserspiegels um 50 % größer geworden, lag aber immer noch unterhalb des zulässigen Grenzwertes. Die nach einem weiteren Monat vorgenommene Messung zeigte keine Änderung mehr. Die Erscheinung, die wahrscheinlich auf Synerese zurückzuführen ist, läuft im ersten Monat ab.

### Beispiel 2

Der Versuch erfolgte auf die im Beispiel 1 beschriebene Weise mit dem Unterschied, daß der Rohrabschnitt in gesiebten, gröberen Kies eingebettet wurde, weshalb mit einem größeren Verbrauch an Lösung zu rechnen war. Ein zu großer Chemikalienverbrauch verschlechtert jedoch die Wirtschaftlichkeit des Verfahrens. Es ist daher in derartigen Fällen zweckmäßig, die Viskosität der Komponenten A und B zu vergrößern und Auffüllösung geringerer Viskosität nur im Falle eines erforderlichen zweiten Auffüllvorganges zu verwenden. Die Rezepturen waren folgende:

| | | |
|---|---|---|
| Komponente A₁ | 3 % | PAA wie in Beispiel 1 |
| | 6 % | MgCl₂ wie in Beispiel 1 |
| | 6 % | Al₂(SO₄)₃ (technisches Al₂(SO₄)₃.18 H₂O) |
| | 85 % | Wasser. |

Die Herstellung der 3,6 m³ Komponente A erfolgte auf die im Beispiel 1 beschriebene Weise. Die Lösung hatte eine Viskosität von 180 mPa.s

| | | |
|---|---|---|
| Komponente A₂ | zu der nach dem ersten Auffüllen zurückgepumpten Lösung A₁ (etwa 3 m³) wurden 2 m³ Wasser gegeben. Nach dem Homogenisieren hatte die Lösung eine Viskosität von 45,0 mPa.s. | |
| Komponente B₁ | 96 % | Na-Wasserglas wie in Beispiel 1 |
| | 4 % | Na₂HPO₄ in Form von technischem Na₂HPO₄ . 12 H₂O. |

Die Komponente B₁ wurde hergestellt, indem 3,2 m³ konzentriertes Na-Wasserglas in den Behälter gegeben wurden, dazu gab man 374 kg kristallines Dinatriumhydrogenphosphat. Der Lösungsvorgang wurde durch Umwälzen beschleunigt. Die Lösung wurde mit Leitungswasser auf 3,6 m³ aufgefüllt.

| | | |
|---|---|---|
| Komponente B₂ | 98 % | konz. Kieselsäuresol (Hersteller: Bayer AG; Handelsbezeichnung:Kieselsol 100F/45 |
| | 2 % | Glutaraldehyd in Form einer 25 %igen Lösung. |

Die Komponente B₂ wurde hergestellt, indem 3,3 m³ des milch-artigen Kieselsols in den Behälter gegeben wurden, hinzu kamen 317 Liter technisches Glutaraldehyd, und die Lösung wurde homogenisiert. Die Viskosität betrug 8 mPa.s

Die Sanierung des Versuchsrohrabschnittes erfolgte ähnlich wie in Beispiel 1 beschrieben, jedoch mit dem Unterschied, daß das Auffüllen in zwei Stufen vorgenommen wurde. Es ergab sich nämlich, daß sich das Versickern der Komponente B₁ nicht in dem Maße verlangsamte, wie das gemäß Beispiel 1 der Fall war. Deshalb wurde nach 45 Minuten, als der Spiegel der Komponente B₁ bereits um mehr als 30 cm abgesunken war, die Lösung in den Behälter zurückgepumpt und der Abschnitt mit der Lösung A₂ aufgefüllt. Die Lösung A₂ konnte infolge ihrer geringen Viskosität auch in die feineren Poren und Kapillaren eindringen, in welche die Lösung A₁ nicht eindringen konnte. Wahrscheinlich aus diesem Grunde sank der Spiegel innerhalb von 60 Minuten um etwa 20 cm. Nun wurde die Lösung A₂ in ihren Behälter zurückgepumpt und der Rohrabschnitt mit der noch wesentlich dünnflüssigeren Komponente B₂ aufgefüllt. Obwohl die Komponente B₂ fast so dünn wie Wasser ist, war der Verbrauch doch nur gering, wurde schnell noch geringer und kam nach 50 Minuten zum Stillstand. Der Spiegel war insgesamt um etwa 14 cm gesunken, d.h. von der Komponente B₂ wurden nur etwa 180 l verbraucht.

Danach wurde die Wasserdruckprobe vorgenommen, in deren Verlauf praktisch kein Versickern registriert wurde. Nach einem Monat wurde die Wasserdruckprobe wiederholt, die Werte waren wesentlich günstiger als die gemäß Beispiel 1.

### Beispiel 3

Der dritte Rohrabschnitt wurde im Gegensatz zu den beiden ersten in feinen Sand eingebettet. Damit sich bei Anwendung der gleichen Technologie um die Schadstellen herum ausreichende Mengen an erhärtetem Bodenmörtel bilden, wurde das Auffüllen mit Komponenten geringerer Viskosität begonnen.

| | | |
|---|---|---|
| Komponente A | 1,5 % | PAA wie in Beispiel 1 |
| | 30 % | Al₂(SO₄)₃ (technisches Al₂(SO₄)₃.18 H₂O), |
| | 78,5 % | Wasser. |

Die Herstellung der Komponente A erfolgte ähnlich wie in Beispiel 1 beschrieben, jedoch wurde zum Auflösen Wasser einer Temperatur von 80 °C verwendet. Beim Pumpen war die Lösung noch 45 °C warm. Beim Eindringen in den Boden wurde die Lösung übersättigt, es kam zur Ausscheidung von Aluminiumsulfat. (Zur Zeit der Versuche war die Temperatur des Erdreiches in 2 m Tiefe etwa 17 °C.) Die zurückgepumpte Lösung hatte eine Temperatur von 28 °C. Vor Beginn des zweiten Zyklus wurde die Lösung durch Einblasen von Dampf auf 35 °C erwärmt.

| | | |
|---|---|---|
| Komponente B₁ | 80 % | Na-Wasserglas wie in Beispiel 1 |
| | 15 % | Leitungswasser |
| | 5 % | Na₃PO₄ in Form von technischem Na₃PO₄. .12H₂O |
| Komponente B₂ | | wurde aus dem zurückgepumpten Rest der Komponente B₁ durch Zusatz von 20 % Wasser bereitet. |

Der dritte Rohrabschnitt wurde ähnlich wie der zweite in zwei Zyklen saniert, mit dem Unterschied, daß hier die Komponente A in beiden Zyklen fast die gleiche war, nur der Salzgehalt der Lösung war durch das Abkühlen um einige Prozent geringer geworden, deshalb wurde die Lösung im zweiten Zyklus nur auf 35 °C erwärmt. Im zweiten Zyklus wurde durch Weiterverdünnen der Komponente B₁ angestrebt, auch die feineren Poren und Kapillaren aufzufüllen. Im ersten Zyklus sickerten innerhalb von 30 Minuten etwa 330 l Komponente A durch die Schadstellen in den Boden, von der Komponente B₁ verschwanden in sich verlangsamenden Tempo innerhalb von 40 Minuten insgesamt 210 Liter. Im zweiten Zyklus wurden innerhalb von 30 Minuten 140 Liter Komponente A und innerhalb von 80 Minuten 90 Liter Komponente B₂ verbraucht, dann hörte der Verbrauch auf.

Die Sanierung war erfolgreich, aus den Werten ist ersichtlich, daß die tatsächlichen Sickerwassermengen den zulässigen Grenzwert bei weitem nicht erreichten.

### Beispiel 4

Der zu sanierende Rohrabschnitt war wie der gemäß Beispiel 1 in Kies eingebettet. Die verwendeten Lösungen hatten folgende Zusammensetzung:

| | | |
|---|---|---|
| Komponente A | 6 % | Polyvinylalkohol (PVA), auch in kaltem Wasser löslich, Hydrolysegrad etwa 85 % mittlere Molmasse, Hersteller: Hoechst AG Handelsname: Mowiol N18-88 |
| | 5 % | NaHCO₃ in Form technisch reinen Materials, |
| | 5 % | Na-Aluminat in Form einer technisch reinen etwa 85 %igen Lösung |
| | 85 % | Wasser. |

Das PVA ist ein feines Pulver. Aus diesem wurde langsam, unter ständigem Rühren eine Lösung bereitet, die konzentrierter war als erforderlich. In dieser Lösung wurden die Salze gelöst, und erst zum Schluß wurde durch Zusatz der berechneten Menge Wasser der 6 %ige Polymergehalt eingestellt. Die Viskosität der Lösung betrug 72 mPa.s.

| | | |
|---|---|---|
| Komponente B | 96 % | Na-Wasserglas wie in Beispiel 1 |
| | 4 % | Borsäure in Form einer technisch reinen, etwa 40 %igen Lösung |

Bei der Herstellung der Komponente B war darauf zu achten, daß die Borsäure langsam und unter intensivem Rühren zugesetzt wurde. Die Flüssigkeit hatte eine Viskosität von etwa 76 mPa.s.

Die Sanierung wurde auf die im Beispiel 1 beschriebene Weise in einem Zyklus vorgenommen. Die erhaltenen Ergebnisse sind vorteilhaft.

### Beispiel 5

Der Rohrabschnitt war ähnlich wie in Beispiel 3 in Sand eingebettet. Folgende Rezepturen wurden verwendet:

| | | |
|---|---|---|
| Komponente A | enthielt kein organisches Polymer als Ver. dickungsmittel, jedoch wurde durch Ausfällen (intensives Rühren) von etwas Kieselsol eine sehr feine, kolloidale Suspension bereitet. | |
| | 3 % | Kieselsol (als Trockensubstanz berechnet), Hersteller; Bayer AG, Handelsbezeichnung 300F/30 |
| | 9 % | NaHCO₃ von technischer Reinheit, |
| | 0,1 % | Ca(HCO₃)₂, das sich durch Auflösen des mikronisierten Dolomitpulvers bildet, |
| | 1,9 % | Mg(HCO₃)₂, das sich durch Auflösen des mikronisierten Dolomitpulvers bildet, |
| | 86 % | kohlensaures Wasser mit 0,3 bar CO₂-Überdruck. |

Die Komponente A wurde in dem druckfesten, 6 m³ fassenden Behälter eines Schlammwagens (Lastkraftwagenbau Räba, Gyïr) wie folgt bereitet. 3,3 m³ Leitungswasser werden in den Behälter gegeben, dazu wurden unter intensivem Rühren 340 kg NaHCO₃ und 80 kg mikronisierter Dolomit gegeben. Das Rühren wurde 30 Minuten lang fortgesetzt, dann wurde der Behälter verschlossen und aus Hochdruckgasflaschen so viel CO₂ in die Lösung gepreßt, daß im Gasraum ein Überdruck von 0,2 bar entstand. Nach weiteren 30 Minuten war der Überdruck praktisch verschwunden. Unter Umwälzen der Lösung wurden 0,3 m³ Kieselsol 300F/30 zugesetzt. Nach Verschließen des Behälters wurde durch Einpressen von CO₂ ein Überdruck von 0,3 bar eingestellt. Aus dieser kolloidal feinen Suspension fällt im Boden, nachdem sich das CO₂ entfernt hat, ein Teil der Hydrocarbonate aus und verklebt die Kieselsäureteilchen miteinander.

| | | |
|---|---|---|
| Komponente B | 82 % | Na-Wasserglas wie in Beispiel 1 |
| | 3 % | Na₂HPO₄ aus technisch reinem Na₂HPO₄ x12H₂O |
| | 15 % | Wasser |

Das gut lösliche Dinatriumhydrogenphosphat wurde unter intensivem Rühren in der Wasserglaslösung gelöst. Die Lösung hatte eine Viskosität von 48 mPa.s

Der Rohrabschnitt wurde in einem Zyklus saniert, jedoch wurde der Schacht zuerst nur bis zu 1 m Flüssigkeitssäule aufgefüllt, um die Sickergeschwindigkeit der dünnen Suspension zu verringern. Erst nach etwa 20 Minuten wurde die Flüssigkeitssäule auf 2 m aufgefüllt. Nach weiteren 20 Minuten wurde die Komponente A zurückgepumpt und die Komponente B zugeführt. Die Komponente B verblieb 90 Minuten im Kanalabschnitt, innerhalb dieser Zeit kam das Sickern zum Stillstand. Auch diese Sanierung war erfolgreich.

### Beispiel 6

Dieser Rohrabschnitt wurde in ein etwa im Verhältnis 1:1 bereitetes Gemisch aus Sand und Kies eingebettet. Folgende Rezepturen fanden Verwendung:

| | | |
|---|---|---|
| Komponente A | 5 % | PVA wie in Beispiel 4 |
| | 5 % | MgCl₂ aus technischem MgCl₂.6H₂O |
| | 2 % | Kaliumpersulfat, technisch rein, |
| | 88 % | Wasser. |

Die Komponente A wurde auf die im Beispiel 4 beschriebene Weise bereitet. Zunächst wurde das PVA-Pulver gelöst und dann das Salz zu der Lösung gegeben. Die homogene Lösung hatte eine Viskosität von 52 mPa.s

| | | |
|---|---|---|
| Komponente B | 91 % | Kieselsol 100F/45 |
| | 7,8 % | Acrylsäure, technisch |
| | 0,2 % | Methylen-bis-acrylamid, technisch |
| | 0,5 % | Citronensäure, Lebensmittelqualität |
| | 0,5 % | FeSO₄ aus technisch reinem FeSO₄.7H₂O |

Die Komponente B wurde unter intensivem Rühren hergestellt, indem die Acrylsäure allmählich zu dem Kieselsol gegeben wurde. Danach wurde die Citronensäure zugegeben, und, nachdem sich alles gelöst hatte, das feinpulverige Eisensulfat. Die Viskosität der Lösung betrug 6 mPa.s.

Die Sanierung erfolgte ähnlich wie in Beispiel 5 beschrieben, d.h. die Flüssigkeitsäule wurde allmählich aufgebaut. Nach Zurückpumpen der Komponente A wurde auch die Höhe der Komponente B langsam gesteigert. Das Versickern der Lösung B hörte nach etwa 50 Minuten auf. Wie aus der Tabelle 1 zu entnehmen ist, unterlag das gebildete Gel im ersten Monat kaum einer Synerese. Der Vortzeil dieses Gels besteht darin, daß es elastisch ist und auch zur Reparatur von Kanalabschnitten verwendet werden kann, die starker Vibration ausgesetzt sind.

### Beispiel 7

Ein Kanalabschnitt von 42 m Länge und 300 mm Durchmesser sollte saniert werden. Der Abschnitt lag zwischen zwei Schächten und wies 6 Seiteneinbindungen auf. Folgende Rezepturen wurden verwendet:

| | | |
|---|---|---|
| Komponente A | 7,5 % | PVA wie in Beispiel 4 |
| | 5 % | MgCl₂ aus technischem MgCl₂.6H₂O |
| | 8 % | Al₂(SO₄)₃ (technisches Al₂(SO₄)₃.18 H₂O), |
| | 4 % | FeSO₄ aus technisch reinem FeSO₄.7H₂O |
| | 75,5 % | Wasser. |

Die Komponente A wurde wie in den vorhergehenden Beispielen beschrieben hergestellt, nur in größerer Menge. Zum Auffüllen des beschriebenen Abschnittes waren 11-12 m³ Flüssigkeit erforderlich (darin sind die Sickerverluste bereits enthalten.) Die Viskosität der Lösung beträgt 80 mPa.s.

| | | |
|---|---|---|
| Komponente B | 95 % | Na-Wasserglas wie in Beispiel 1, |
| | 5 % | Borax aus technisch reinem Na₂B₄O₇.10H₂O. |

Das pulverisierte Borax wurde langsam, unter intensivem Rühren aufgelöst. Die Lösung hatte eine Viskosität von etwa 80 mPa.s.

Die Sanierung erfolgte ähnlich wie in den Beispielen 1 und 4 beschrieben, nur wurde wegen der größeren Mengen zum Auffüllen und Zurückpumpen mehr Zeit (etwa 5-6 Minuten) gebraucht. Im ersten Zyklus hörte das Wegsickern der Lösung B auch nach 60 Minuten nicht auf, deshalb wurde das Auffüllen wiederholt. Im zweiten Zyklus kam die Abnahme der Komponente B nach 20 Minuten zum Stillstand. Die Sanierung war erfolgreich.

## Patentansprüche

1. **Verfahren** zum Wasserdichtmachen von in den Boden eingebetteten Ingenieursobjekten mittels Auffüllen, bei dem als erste Lösung eine wässrige Lösung von die Umwelt nicht schädigenden wasserlöslichen Salzen mehrwertiger Metalle auf oder in das Ingenieursobjekt eingeleitet, gegebenenfalls der Überschuß der wässrigen Metallsalzlösung entfernt und als zweite Lösung eine gegebenenfalls Zusatzstoffe enthaltende wässrige Wasserglaslösung mit einer Viskosität von 20 bis 200 mPa.s oder ein wässriges Kieselsäuresol mit einem pH-Wert zwischen 1 und 9 dem Ingenieursobjekt zugeleitet wird,
dadurch gekennzeichnet,
daß man
(a) die Viskosität der wässrigen Lösung der Salze mehrwertiger Metalle mit wasserlöslichen, nichtionischen linearen Polymeren auf 20 bis 200 mPa.s einstellt, oder
(b) als Lösung der wasserlöslichen Salze mehrwertiger Metalle eine bei 35° bis 45°C gesättigte Lösung der entsprechenden Salze verwendet, oder
(c) der Lösung der wasserlöslichen Salze mehrwertiger Metalle Alkalicarbonat und/oder -hydrogencarbonat und gegebenenfalls/oder Kohlendioxyd in der Menge zusetzt, daß sich noch kein Niederschlag bildet, oder
(d) der Lösung der wasserlöslichen Salze mehrwertiger Metalle entweder eine vorher getrennt bereitete feine wässrige Suspension zumischt und/oder in der Lösung selbst eine feine Suspension erzeugt, oder
(e) die Methoden (a) bis (d) kombiniert anwendet, wobei im Falle der Methoden (a) und (d) die Reihenfolge der beiden Lösungen (1. Lösung, 2. Lösung) auch umgekehrt werden kann und das Auffüllen erforderlichenfalls noch einmal oder mehrmals wiederholt wird, mit der Maßgabe,
daß weder die 1. Lösung noch die 2. Lösung Fluorkieselsäure enthält.

2. Verfahren nach Anspruch 1, dadurch **gekennzeichnet**, daß man zum Einstellen der Viskosität Polymere mit einer Molmasse zwischen 5x10⁴ und 2x10⁷, insbesondere oberhalb von 1x10⁵, verwendet.

3. Verfahren nach Anspruch 2, dadurch **gekennzeichnet**, daß man der wässrigen Metallsalzlösung 0,01-10 Masse% Polymer zusetzt.

4. Verfahren nach Anspruch 1 bis 3, dadurch **gekennzeichnet**, daß man als Polymer Polyacrylamide, Polyethylenoxyde, Polyvinylalkohole, Polyvinylpyrrolidone und/oder wasserlösliche Celluloseether verwendet.

5. Verfahren nach einem der Ansprüche 1 bis 4,dadurch **gekennzeichnet**, daß man entweder der ersten oder der zweiten Lösung Vernetzer für das Polymer zusetzt.

6. Verfahren nach Anspruch 1a), dadurch **gekennzeichnet**, daß man der Wasserglaslösung oder dem Kieselsäuresol den Vernetzer für das Polymer zusetzt.

7. Verfahren nach Anspruch 6, dadurch **gekennzeichnet**, daß man als Vernetzer des Polymers freie Radikale liefernde Perverbindungen einsetzt.

8. Verfahren nach einem der Ansprüche 1 bis 4, dadurch **gekennzeichnet**, daß man der wässrigen Metallsalzlösung außer dem Polymer noch eine zum Vernetzen des Polymers geeignete, in der wässrigen Metallsalzlösung jedoch inaktive und erst durch die Einwirkung von Lauge aktiv werdende Verbindung zusetzt.

9. Verfahren nach einem der Ansprüche 1 bis 8, dadurch **gekennzeichnet**, daß die Suspension der Methode (d) in der Lösung erzeugt wird:
- durch Dispergieren feiner, staubförmiger Stoffe,
- durch Ausfällung mittels einer weiteren, der Metallsalzlösung zugesetzten Lösung,
- durch Koagulieren von der Metallsalzlösung zugesetztem Kieselsäuresol, oder
- durch Kombination dieser Möglichkeiten.

10. Verfahren nach Anspruch 9, dadurch **gekennzeichnet**, daß die Suspension mit Hilfe von Na-Bentonit, Ca-Bentonit, Kaolin, Zeolith, Quarzmehl, Kalkstein, Dolomit, Aerosil oder Tonerdehydrat oder Mischungen hiervon hergestellt wird.

11. Verfahren nach einem der Ansprüche 1 bis 10, dadurch gekennzeichnet, daß nach Einleiten der wässrigen Lösung von die Umwelt nicht schädigenden wasserlöslichen Salzen mehrwertiger Metalle der Überschuß dieser Lösung entfernt wird, bevor die zweite Lösung eingeleitet wird.

12. Verfahren nach einem der Ansprüche 1 bis 10, wobei die zweite Lösung vor der ersten eingeleitet wird, dadurch **gekennzeichnet**, daß sie ein gelbildendes Mittel enthält und daß ein evtl. vorhandener Überschuß dieser Lösung vor dem Einleiten der ersten Lösung wieder entfernt wird, wobei ein die Gelbildung inhibierendes oder rückgängig machendes Mittel zugesetzt wird.

13. Verfahren nach Anspruch 12, dadurch **gekennzeichnet**, daß die zweite Lösung eine Wasserglaslösung und der Gelbildner ein Wasserglasvernetzer ist, wobei eine alkalische Lösung wie Natronlauge als die Gelbildung inhibierendes oder rückgängig machendes Mittel zugesetzt wird.

## Claims

1. A method for water-proofing engineering objects embedded in the ground by means of a filling-up process, wherein, as a first solution, an aqueous solution of water-soluble salts of polyvalent metals which are not harmful to the environment are fed to or into the engineering object, wherein the excess aqueous solution of metallic salts is removed, if necessary, and, as a second solution, an aqueous water-glass solution containing additives, if necessary, and having a viscosity of 20 to 200 mPa.s or an aqueous silica sol having a pH-value of between 1 and 9 is fed to the engineering object,
characterized in that
(a) the viscosity of the aqueous solution of the salts of polyvalent metals is controlled by means of water-soluble, non-ionic linear polymers to be 20 to 200 mPa.s, or
(b) a solution of the corresponding salts which is saturated at 35° to 45°C is used as the solution of the water-soluble salts of polyvalent metals, or
(c) alkali carbonate and/or alkali hydrogen carbonate and/or carbon dioxide, if necessary, are added to the solution of the water-soluble salts of polyvalent metals in such an amount that no precipitation is formed yet, or
(d) the solution of the water-soluble salts of polyvalent metals is either mixed with a previously separately prepared fine aqueous suspension and/or a fine suspension is produced in the solution itself, or
(e) methods (a) to (d) are used in combination, wherein in case methods (a) and (d) are used the sequence of the two solutions (1st solution, 2nd solution) may also be reversed and the filling-up process is repeated once or several times, if necessary, provided that
neither the first solution nor the second solution contain hydrofluosilicic acid.

2. The method according to claim 1, characterized in that for controlling the viscosity polymers having a molar mass of between 5x10⁴ and 2x10⁷, especially of more than 1x10⁵, are used.

3. The method according to claim 2, characterized in that the aqueous solution of metallic salts is added 0.01-10 % by mass of polymer.

4. The method according to any one of claims 1 to 3, characterized in that polyacrylamides, polyethylene oxides, polyvinyl alcohols, polyvinyl pyrrolidones and/or water-soluble cellulose ether are used as the polymer.

5. The method according to any one of claims 1 to 4, characterized in that either the first or the second solution is added a cross-linking agent for the polymer.

6. The method according to claim la), characterized in that the cross-linking agent for the polymer is added to the water-glass solution or the silica sol.

7. The method according to claim 6, characterized in that per-components producing free radicals are employed as the cross-linking agent of the polymer.

8. The method according to any one of claims 1 to 4, characterized in that besides the polymer also a compound suitable for cross-linking the polymer is added to the aqueous solution of metallic salts, which compound is, however, inactive in the aqueous solution of metallic salts and only becomes active under the effect of an alkaline solution.

9. The method according to any one of claims 1 to 8, characterized in that the suspension of method (d) is produced in the solution:
- by dispersion of fine, dust-like substances,
- by precipitation by means of a further solution which is added to the solution of metallic salts,
- by coagulation of silica sol which is added to the solution of metallic salts, or
- by combination of said possibilities.

10. The method according to claim 9, characterized in that the suspension is produced with the aid of Na-bentonite, Cabentonite, kaolin, zeolithe, quartz powder, limestone, dolomite, aerosil or aluminium hydrate or mixtures thereof.

11. The method according to any one of claims 1 to 10, characterized in that subsequent to the introduction of the aqueous solution of water-soluble salts of polyvalent metals which are not harmful to the environment, the excess of said solution is removed prior to introducing the second solution.

12. The method according to any one of claims 1 to 10, wherein the second solution is introduced prior to the first one, characterized in that it contains a gelling agent and in that a possibly present excess of said solution is removed prior to introducing the first solution, wherein an agent is added which inhibits gelling or makes gelling undone.

13. The method according to claim 12, characterized in that the second solution is a water-glass solution and the gelling agent is a water-glass cross-linking agent, wherein an alkaline solution, such as soda lye, is added as the agent inhibiting gelling or making gelling undone.

## Revendications

1. Procédé d'étanchéification à l'eau d'objets d'ingénierie insérés dans le sol, par remplissage, dans lequel on introduit, en tant que première solution, une solution aqueuse de sels hydrosolubles de métaux polyvalents, qui ne sont pas nocifs pour l'environnement, sur ou dans l'objet d'ingénierie, le cas échéant on élimine l'excès de solution aqueuse de sels de métaux et on amène jusqu'à l'objet d'ingénierie, en tant que seconde solution, une solution aqueuse de verre soluble contenant éventuellement des additifs et ayant une viscosité de 20 à 200 mPa.s ou un sol aqueux d'acide silicique ayant une valeur de pH comprise entre 1 et 9, caractérisé en ce que :
(a) on ajuste la viscosité de la solution aqueuse des sels de métaux polyvalents à une valeur comprise entre 20 et 200 mPa.s avec des polymères linéaires hydrosolubles non ioniques, ou
(b) comme solution de sels hydrosolubles de métaux polyvalents, on utilise une solution saturée des sels correspondants à une température comprise entre 35 et 45°C, ou
(c) on ajoute, à la solution de sels hydrosolubles de métaux polyvalents, du carbonate et, le cas échéant, de l'hydro-génocarbonate d'alcali et/ou le cas échéant du dioxyde de carbone en une quantité telle qu'un précipité ne se forme pas encore, ou
(d) on ajoute une fine suspension aqueuse préalablement préparée séparément à la solution de sels hydrosolubles de métaux polyvalents et/ou on produit une fine suspension dans la solution elle-même, ou
(e) on applique les procédés (a) à (d) d'une manière combinée, et dans le cas des procédés (a) et (d), on peut aussi inverser l'ordre des deux solutions (1^{ère} solution, 2^{nde} solution), et si cela est nécessaire, recommencer le remplissage une ou plusieurs fois à condition que ni la 1^{ère} solution ni la 2^{nde} solution ne contiennent de l'acide fluosilicique.

2. Procédé selon la revendication 1, caractérisé en ce que, pour ajuster la viscosité, on utilise des polymères d'un poids moléculaire compris entre 5 x 10⁴ et 2 x 10⁷, en particulier supérieur à 1 x 10⁵.

3. Procédé selon la revendication 2, caractérisé en ce qu'on ajoute de 0,01 à 10 % en poids de polymère à la solution aqueuse de sels de métaux.

4. Procédé selon les revendications 1 à 3, caractérisé en ce qu'on utilise, comme polymère, du polyacrylamide, des oxydes de polyéthylène, des alcools polyvinyliques, de la polyvinylpyrrolidone et/ou des éthers de cellulose solubles dans l'eau.

5. Procédé selon l'une des revendications 1 à 4, caractérisé en ce qu'on ajoute un agent de réticulation pour le polymère à la première ou à la seconde solution.

6. Procédé selon la revendication 1 (a), caractérisé en qu'on ajoute l'agent de réticulation pour le polymère à la solution de verre soluble ou au sol d'acide silicique.

7. Procédé selon la revendication 6, caractérisé en ce qu'on utilise des composés de type per donnant des radicaux libres en tant qu'agent de réticulation du polymère.

8. Procédé selon l'une des revendications 1 à 4, caractérisé en ce qu'on ajoute aussi à la solution aqueuse de sels de métaux, en plus du polymère, un composé approprié à la réticulation du polymère, mais qui est inactif dans la solution aqueuse de sels de métaux et qui ne devient actif que par l'action d'une lessive.

9. Procédé selon l'une des revendications 1 à 8, caractérisé en ce qu'on produit la suspension du procédé (d) dans la solution :
- par dispersion de fines substances pulvérulentes,
- par précipitation au moyen d'une solution supplémentaire ajoutée à la solution de sels de métaux,
- par coagulation du sol d'acide silicique ajouté à la solution de sels de métaux, ou
- au moyen d'une combinaison de ces possibilités.

10. Procédé selon la revendication 9, caractérisé en ce qu'on prépare la suspension à l'aide de bentonite sodique, de bentonite calcique, de kaolin, d'une zéolite, de poudre de quartz, de pierre à chaux, de dolomite, d'Aérosil, d'hydrate d'alumine ou de mélanges de ceux-ci.

11. Procédé selon l'une des revendications 1 à 10, caractérisé en ce que, après l'introduction de la solution aqueuse de sels hydrosolubles de métaux polyvalents qui ne sont pas nocifs pour l'environnement, on élimine l'excès de cette solution avant d'introduire la seconde solution.

12. Procédé selon l'une des revendications 1 à 10, dans lequel on introduit la seconde solution avant la première, caractérisé en ce que cette seconde solution contient un agent gélifiant et en ce qu'un excès de cette solution éventuellement présent est éliminé là aussi avant l'introduction de la première solution, auquel cas on ajoute un agent qui inhibe ou qui supprime la formation de gel.

13. Procédé selon la revendication 12, caractérisé en ce que la seconde solution est une solution de verre soluble et l'agent gélifiant est un agent de réticulation de verre soluble, auquel cas on ajoute une solution alcaline telle qu'une lessive de soude en tant qu'agent inhibant ou supprimant la formation de gel.
